# EUROPEAN PATENT APPLICATION

(11) **EP 2 334 107 A1**
(43) Date of publication of application: **15.06.2011**
(21) Application number: 09815561.7
(22) Date of filing: 27.03.2009
(51) Int. Cl.: H04W 4/12

(54) **METHOD SYSTEM AND DEVICE FOR NOTIFYING EMIGRATION**

(30) Priority: 26.09.2008 CN 200810168301
(71) Applicant: Huawei Technologies Co., Ltd., Longgang District, Shenzhen Guangdong 518129 (CN)
(72) Inventor: ZHANG, Yongjing, Longgang District 518129, Shenzhen (CN); WANG, Jue, Longgang District 518129, Shenzhen (CN); MU, Lunjian, Longgang District 518129, Shenzhen (CN); XU, Guojun, Longgang District 518129, Shenzhen (CN); HUANG, Cheng, Longgang District 518129, Shenzhen (CN); BIAN, Yonggang, Longgang District 518129, Shenzhen (CN); LIANG, Gang, Longgang District 518129, Shenzhen (CN); WANG, Hao, Longgang District 518129, Shenzhen (CN)
(74) Representative: Kreuz, Georg Maria
(86) International application number: PCT/CN2009/071053
(87) International publication number: WO 2010/034191

(57) **Abstract**

A transfer notification method, system, and device are provided. The method includes the following steps. A first identifier and a second identifier of a first user are obtained. At least one user in touch with the first user is obtained as a second user. A transfer notification is sent to the second user. The transfer notification includes the first identifier and the second identifier of the first user. Therefore, by using the method for notifying contacts of address book transfer, the contacts in touch with a transferred user can receive a corresponding notification. Therefore, the two parties can update contact information in time and use rich functions provided by a Converged Address Book (CAB) after the transfer.

## Description

### FIELD OF THE TECHNOLOGY

The present invention relates to the field of communications technology, and more particularly to a transfer notification method, system, and device.

### BACKGROUND OF THE INVENTION

A Converged Address Book (CAB) is a network address book provided for a user, which can be used in multiple services and apparatuses, to provide the user with network storage of contact information.

The CAB may also provide an address book transfer (that is, import/export) function. That is, the CAB supports to import other address books of the user. Especially, when the user has just subscribed to the CAB service, the function enables the user to import existing address book information of the user the CAB.

The prior art at least has the following problems:

After a user transfers to a CAB system, if contact information or an identifier of the user is changed after the transfer, former contacts of the user can no longer find the user.

### SUMMARY OF THE INVENTION

The present invention provides a transfer notification method, system, and device, so that when a user in a legacy address book is transferred to a CAB system, contacts of the user or other users having the transferred users as contacts receive a necessary transfer notification, and thus establishing new connections between the two parties.

In order to achieve the above objective, according to the first aspect of the present invention a transfer notification method includes the following steps:
A first identifier and a second identifier of a first user are obtained.
At least one user in touch with the first user is obtained as a second user.
A transfer notification is sent to the second user. The transfer notification includes the first identifier and the second identifier of the first user.

According to the second aspect of the present invention a transfer notification system includes a first user server and a second user server.

The first user server is configured to obtain a first identifier and a second identifier of a first user, obtain at least one user in touch with the first user as a second user, and send a transfer notification.

The second user server is configured to receive the transfer notification sent by the first user server, and forward the transfer notification to the second user.

According to the third aspect of the present invention a transfer notification system includes a first user client, a first user server, and a second user server.

The first user client is configured to obtain a first identifier and a second identifier of a first user, obtain at least one user in touch with the first user as a second user, and send a transfer notification.

The first user server is configured to receive the transfer notification sent by the first user client, and forward the transfer notification according to one of addresses of the second user.

The second user server is configured to receive the transfer notification forwarded by the first user server, and forward the transfer notification to the second user.

According to the fourth aspect of the present invention a server includes a first obtaining module, a second obtaining module, and a sending module.

The first obtaining module is configured to obtain a first identifier and a second identifier of a first user.

The second obtaining module is configured to obtain at least one user in touch with the first user as a second user.

The sending module is configured to send a transfer notification to the second user.

Compared with the prior art, the present invention has the following advantages: A method for notifying contacts of address book transfer is provided, so that the contacts in touch with a transferred user can receive corresponding notification. Therefore, the two parties can update contact information in time and use rich functions provided by a CAB after the transfer.

### BRIEF DESCRIPTION OF THE DRAWINGS

To illustrate the technical solutions according to the embodiments of the present invention or in the prior art more clearly, the accompanying drawings for describing the embodiments or the prior art are described briefly in the following. Apparently, the accompanying drawings in the following description are only some embodiments of the present invention, and persons of ordinary skill in the art can derive other drawings from the accompanying drawings without creative efforts.
FIG. 1 is a flow chart of a transfer notification method according to a first embodiment of the present invention;
FIG. 2 is a flow chart of a transfer notification method according to a second embodiment of the present invention;
FIG. 3 is a flow chart of a transfer notification method according to a third embodiment of the present invention;
FIG. 4 is a flow chart of a transfer notification method according to a fourth embodiment of the present invention;
FIG. 5 is a schematic diagram of a transfer notification system according to a fifth embodiment of the present invention;
FIG. 6 is a schematic diagram of a transfer notification system according to a sixth embodiment of the present invention; and
FIG. 7 is a schematic diagram of a transfer notification device according to a seventh embodiment of the present invention.

### DETAILED DESCRIPTION OF THE EMBODIMENTS

The technical solutions of the present invention are clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

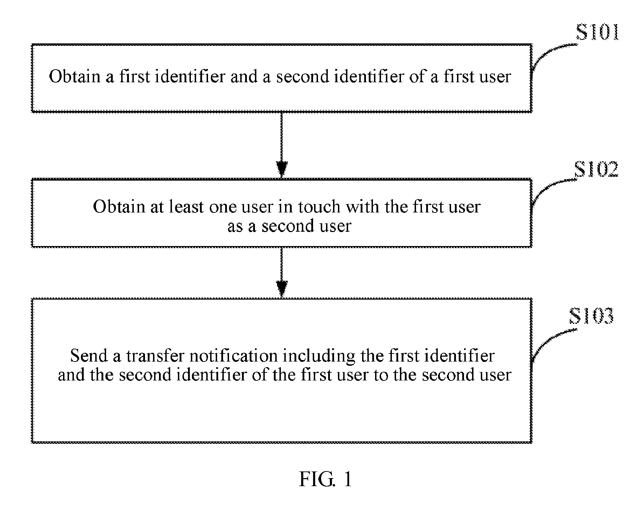

In a first embodiment, the present invention provides a transfer notification method. As shown in FIG. 1, the method includes the following steps:
Step S101: Obtain a first identifier and a second identifier of a first user.
Step S102: Obtain at least one user in touch with the first user as a second user.
Step S103: Send a transfer notification to the second user. The transfer notification includes the first identifier and the second identifier of the first user.

It may be seen from the above description that, in the embodiment of the present invention, the method for notifying contacts of address book transfer is provided, so that a person, that is, the second user, in touch with the first user can receive corresponding notification. Therefore, the two parties can update contact information in time and use rich functions provided by a CAB after the transfer.

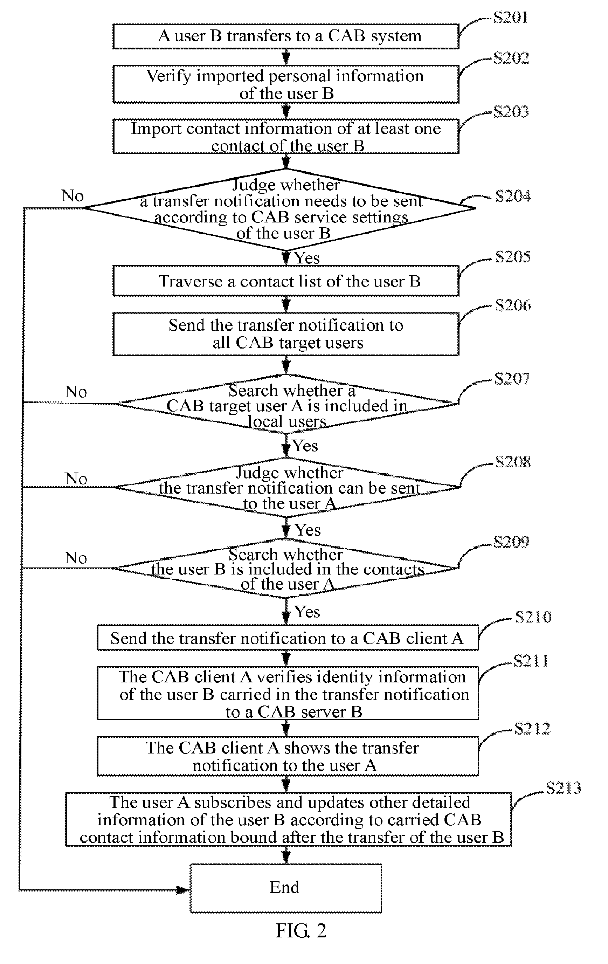

In a second embodiment, the present invention provides a transfer notification method. The method is implemented by servers. In this embodiment, a contact list of a CAB user A (that is, a second user) already includes user B (that is, a first user) in a legacy address book, and a contact list of a legacy address book of the user B also includes contact information of the CAB user A. Then, user B in the legacy address book transfers to be a CAB user, and imports information of contacts in its legacy system to a CAB server B being a home server of the user B (that is, a home server of the first user). The CAB server B sends a transfer notification concerning the user B to the CAB user A according to a contact list imported by the user B. The specific messaging process is shown in FIG. 2, which includes the following steps:
Step S201: The user B transfers from the legacy address book system to a CAB system. Personal information of the user B originally in the legacy address book system is imported to the CAB server B being the home server of the user B. The personal information includes identity information (such as an identity card number and a name) of the user B and/or contact information (such as a telephone number, an E-mail address, an instant messaging ID, and a Session initiation Protocol Uniform Resource Identifier (SIP URI)) of the user B. The personal information of the user B imported from the original legacy address book system to the CAB server B is a second identifier of the user B. The user B may select one or more pieces of the personal information imported to the CAB server B or contact information newly registered in the CAB server B as contact information allocated to the user B in the CAB system. The contact information allocated to the user B in the CAB system is a first identifier of the user B. The first identifier is new information of the user B in the CAB server B, and may be different from the personal information of the user B originally in the legacy address book system.
   Specifically, in the method for importing the personal information of the user B originally in the legacy address book system, the personal information of the user B may be obtained by directly copying from a database of the legacy address book system, or the personal information of the user B may be manually input by the user B or a system administrator, or imported and uploaded to the CAB server by the user B through a CAB client.
   The user B may also choose not to import the personal information in the legacy address book system, and at this moment, the CAB server B temporarily obtains and caches the personal information of the user B in the legacy address book system.
Step S202: The CAB server B verifies the personal information of the user B imported to the CAB server B. In the verification method, the CAB server B may query the original database of the user B in the legacy address book system, check a Personal Identification Number (PIN) input by the user, and compare user service subscription information.
Step S203: The CAB server B obtains contact information (such as a telephone number, an E-mail address, an instant messaging ID, and an SIP URI) of at least one contact of the use B in touch with the user B in the legacy address book system. The obtained contact information of all the contacts of the user B forms a contact list.
   Specifically, in the obtaining method, the contact information of the contacts may be directly obtained from the database of the legacy address book system of the user B, or may be input manually by the user B or a system administrator.
Step S204: The CAB server B checks CAB service settings or personal preferences of the user B, and judges whether a transfer notification needs to be sent to the imported contacts of the user B. If yes, the process turns to step S205; and otherwise, the process ends. The contacts of the user B include the contacts in the obtained contact list of the user B, and also include the contacts in touch with the user B but are not in the contact list of the user B.
   Specifically, the CAB service settings or the personal preferences of the user B are to set whether the user B can send the transfer notification, or set that the user B can send the transfer notification to a part of the contacts imported by the CAB server B.
Step S205: The CAB server B traverses the obtained contact list of the user B, checks the contact information (such as the telephone number, the mail address, the instant messaging ID, and the SIP URI) of all the contacts in the contact list one by one, and judges whether the contact information of the contacts includes CAB addresses meeting requirements of an address book system format (that is, meeting addressing requirements of the CAB system, such as conforming to a syntax form of the SIP URI or a TEL URI). If the contact information of the contacts includes CAB addresses meeting the requirements, the contacts corresponding to the contact information that includes the CAB addresses meeting the requirements of the address book system format are taken as CAB target users of the transfer notification of the user B. If the contact information of the contacts does not include CAB addresses meeting that requirements, the contacts corresponding to the contact information are taken as non-CAB target users of the user B.
Step S206: The CAB server B sends the transfer notification to each of the CAB addresses, that meets the requirements of the address book system format, of all the CAB target users. The transfer notification carries the verified personal information of the user B. The personal information includes the identity information or the contact information of the user B in the legacy system. The transfer notification further carries CAB contact information of the user B allocated to the user B in the CAB system. That is, the transfer notification carries the first identifier of the user B and the second identifier of the user B. Furthermore, the transfer notification also carries contact information of the contacts of the user B. That is, the CAB addresses of the contacts of the user B are carried. The transfer notification can be sent to the addresses of the contacts correctly by using the carried CAB addresses.
   Specifically, each transfer notification only carries one of the CAB addresses of the contacts of the user B. The CAB server B may send the transfer notification according to the CAB address in the specific transfer notification. For each CAB address, the transfer notification needs to be sent separately. If the contact information of the CAB target users of the transfer notification includes multiple CAB addresses meeting the requirements of the address book system format, the CAB server B sends the transfer notification of the same content to each of the CAB addresses of the same CAB target user that meets the requirements of the address book system format. In this embodiment, the CAB server B sends the transfer notification to a CAB server A having the CAB address of the CAB target users that meets the requirements of the address book system format.
   Furthermore, the CAB server B may also send the transfer notification to the non-CAB target users or non-CAB addresses of the CAB target users through an interworking gateway. The transfer notification may have a conventional message form such as a short message, a multimedia message, and an instant message. The notification content carries the first identifier of the user B and the second identifier of the user B.
Step S207: After receiving the transfer notification sent by the CAB server B, the CAB server A (that is, the home server of the CAB target user, i.e. the home server of the second user) searches whether the local users include a CAB target user A. If yes, the process turns to S208; otherwise, the process ends.
   The home server of the CAB target user may check whether the CAB server B sends repeated transfer notification. If yes, the transfer notification is ignored. That is, the CAB server A checks whether the CAB server B sends repeated transfer notification. If repeated transfer notification is sent, the transfer notification is ignored. When the CAB server B sends the transfer notification according to the CAB addresses in the specific transfer notification, the transfer notification is sent to each of the CAB addresses. However, the user A may have multiple addresses, and the CAB server B sends the transfer notification to the multiple addresses of the user A, so that the CAB server A may receive multiple transfer notifications. When repeated transfer notifications occur, the repeated transfer notifications need to be deleted.
Step S208: The CAB server A checks the CAB service settings or the personal preferences of the user A, and judges whether the transfer notification can be sent to the user A. If yes, the process turns to S209; otherwise, the process ends.
Step S209: The CAB server A checks whether the contacts of the user A includes the user B according to the personal information of the user B carried in the transfer notification. If yes, the process turns to step S210, and the user B as the contact of the user A is labeled as the contact of the CAB system; otherwise, the process ends.
   Optionally, in this embodiment, the CAB server A may generate location or index identifier information (such as an index number or a user name) of the user B in the contact list of the user A according to the information of the user B in the contact list of the user A, replace the second identifier in the transfer notification with the index identifier, and generate a transfer notification including the index identifier and the first identifier. The index identifier may also be added to the transfer notification to generate a transfer notification including the index identifier, the first identifier, and the second identifier. Alternatively, the index identifier may be not generated, and the transfer notification including the first identifier and the second identifier is sent to a CAB client A directly.
Step S210: The CAB server A sends the transfer notification to the CAB client A. The transfer notification includes the first identifier and the second identifier, or includes the index identifier, the first identifier, and the second identifier, or includes the index identifier and the first identifier.
   Specifically, in step S209, if the CAB server A does not generate the location or index identifier information of the user B in the contact list of the user A according to the information of the user B in the contact list of the user A, the CAB client A may also generate the location or index identifier information of the user B in the contact list of the user A according to the information of the user B in the contact list of the user A, so as to find relevant information of the user B in the contact list of the user A according to the index identifier.
Step S211: The CAB client A verifies the personal information of the user B carried in the transfer notification, through the CAB server B or the legacy system. That is, the second identifier or the index identifier of the user B is verified.
Step S212: The CAB client A shows the transfer notification of the user B to the user A, and reminds the user A that the user B in the contact list of the user A has transferred to be a CAB user B according to the index identifier or the second identifier of the user B in the contact list of the user A in the transfer notification.
Step S213: The user A further subscribes and updates other detailed information of the user B according to CAB contact information (the first identifier) of the user B allocated after the transfer of the user B and carried in the transfer notification.

It can be seen from the above description that, in the embodiment of the present invention, the method for notifying the contacts of the address book transfer by using servers is provided, so that the contact of the first user, that is, the second user, can receive the corresponding notification. Therefore, the two parties can update the contact information in time and use rich functions provided by the CAB after the transfer.

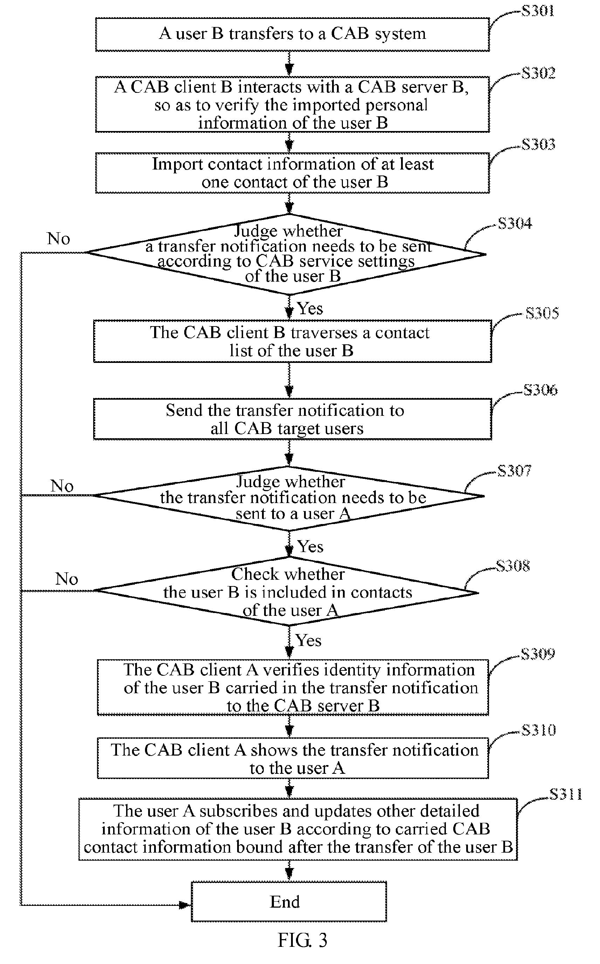

In a third embodiment, the present invention provides a transfer notification method. The method is implemented by clients. In this embodiment, a contact list of a CAB user A already includes a legacy address book user B. A contact list of the user B in the legacy address book also includes contact information of the CAB user A. Then, the legacy address book user B transfers to be a CAB user, and contact information of the legacy system is imported by a CAB client B of the user B. The CAB client B sends a transfer notification concerning the user B to the CAB user A according to the contact list imported by the user B. The specific messaging process is shown in FIG. 3, which includes the following steps:
Step S301: The user B transfers from the legacy address book system to a CAB system. The user B imports personal information of the user B originally in the legacy address book system to the CAB client B of the user B (that is, a home client of a first user). The personal information includes identity information (such as an identity card number, a name) of the user B and/or contact information (such as a telephone number, an E-mail address, an instant messaging ID, and an SIP URI) of the user B. The personal information imported from the original legacy address book system to the CAB client B by the user B is a second identifier of the user B. The user B may select one or more pieces of imported or newly registered contact information as contact information allocated to the user B in the CAB system. The contact information allocated to the user B in the CAB system is a first identifier of the user B. The first identifier is new information of the user B in the CAB client B, and may be different from the personal information of the user B originally in the legacy address book system.
   Specifically, in the method for importing the personal information of the user B originally in the legacy address book system, the personal information of the user B may be downloaded by the user B from a database of the legacy address book system, input manually by the user B or imported from a file.
   The user B may also choose not to import the personal information thereof in the legacy address book system, and at this moment, the CAB client B temporarily obtains and caches the personal information of the user B in the legacy address book system.
Step S302: The CAB client B interacts with a CAB server B, so that the CAB server B can verify the personal information of the user B imported to the CAB client B. In the verification method, the CAB server B may query the database of the legacy address book system, check a PIN input by the user B, and compare user service subscription information.
Step S303: The CAB client B obtains contact information (such as a telephone number, an E-mail address, an instant messaging ID, and an SIP URI) of at least one contact of the user B in touch with the user B from the legacy address book system. The obtained contact information of all the contacts of the user B forms a contact list.
   Specifically, in the obtaining method, the contact information of the contacts may be downloaded from the database of the legacy address book system, input manually by the user, or imported from a file.
Step S304: The CAB client B checks CAB service settings or personal preferences of the user B, which are configured locally and in the CAB server B, and judges whether a transfer notification needs to be sent to the imported contacts of the user B. If yes, the process turns to S305; otherwise, the process ends. The contacts of the user B include the contacts in the obtained contact list of the user B, and also include the contacts in touch with the user B but are not in the contact list of the user B.
   Specifically, the CAB service settings or the personal preferences of the user B are to set whether the user B can send the transfer notification, or to set that the user B can send the transfer notification to part of the contacts imported by the CAB client B.
Step S305: The CAB client B traverses the obtained contact list of the user B, checks the contact information (such as the telephone number, the E-mail address, the instant messaging ID, and the SIP URI) of all the contacts in the contact list one by one, and judges whether the contact information of the contacts includes CAB addresses meeting requirements of an address book system format (that is, meeting addressing requirements of the CAB system, such as conforming to a syntax form of the SIP URI or a TEL URI). If the contact information of the contacts includes CAB addresses meeting the requirements, the contacts corresponding to the contact information that includes the CAB addresses meeting the requirements of the address book system format are used as CAB target users of the transfer notification of the user B. If the contact information of the contacts does not include CAB addresses meeting the requirements, the contacts corresponding to the contact information that includes the CAB addresses not meeting the requirements of the address book system format are used as non-CAB target users of the user B.
Step S306: The CAB client B sends the transfer notification to each of the CAB addresses, which meets the requirements of the address book system format, of all the CAB target users. The transfer notification carries the verified personal information of the user B. The personal information includes the identity information or the contact information of the user B in the legacy system. The transfer notification also carries CAB contact information of the user B allocated to the user B in the CAB system. That is, the transfer notification carries the first identifier of the user B and the second identifier of the user B. Furthermore, the transfer notification also carries contact information of the contacts of the user B, that is, the CAB addresses of the contacts of the user B. The transfer notification can be sent to the addresses of the contacts correctly by using the carried CAB addresses.
   Specifically, the transfer notification may carry one of the CAB addresses of the contact (that is, the user A) of the user B only. The CAB client B may send the transfer notification according to the CAB address in the specific transfer notification, and the transfer notification is forwarded by the CAB server B and the CAB server A. For each CAB address, the transfer notification needs to be sent separately. Furthermore, the transfer notification may also carry all CAB addresses of the contacts of the user B. That is, the transfer notification carries address list information of the contacts. The CAB client B sends the transfer notification carrying the address list information of the contacts to the CAB server B. The CAB server B sends the transfer notification to each of the addresses in the address list information separately according to address information in the address list information of the contacts. The separately sent transfer notification is forwarded by the CAB server A. If the contact information of the CAB target users of the transfer notification includes multiple CAB addresses meeting the requirements of the address book system format, the CAB client B sends the same transfer notification to each of the CAB addresses of the same CAB target user that meets the requirements of the address book system format. In this embodiment, the CAB client B sends the transfer notification to the CAB client A having the CAB address of the CAB target users meeting the requirements of the address book system format.
   Furthermore, the CAB client B may also send the transfer notification to the non-CAB target users or non-CAB addresses of the CAB target users through other clients connected to the local. The transfer notification may be in the form of conventional messages such as a short message, a multimedia message, and an instant message. The notification carries the first identifier of the user B and the second identifier of the user B.
   The sending of the transfer notification by the CAB client B to the CAB client A specifically includes the following steps: The CAB client B interacts with the CAB server B, so that the CAB server B forwards the transfer notification to home servers (for example, the CAB server A) of all the CAB target users. When the transferred user B and the CAB target user A belong to the same CAB server, the transfer notification can be replaced by internal interaction of the CAB server. After receiving the transfer notification forwarded by the CAB server B, the CAB server A searches whether the local users include the CAB target user A. If the CAB target user A is not included, the process ends. If the CAB target user A is included, the CAB server A also needs to check whether the received transfer notification is a repeated notification. If yes, the transfer notification is ignored. When the CAB server B sends the transfer notification according to the CAB addresses in the specific transfer notification, the transfer notification is sent to each CAB address. However, the user A may have multiple addresses, and the CAB server B sends the transfer notification to the multiple addresses of the user A, so that the CAB server A may receive multiple transfer notifications. When repeated some transfer notifications occur, the repeated transfer notifications need to be deleted.
   The CAB server A also needs to check the CAB service settings or the personal preferences of the user A, and judge whether the transfer notification needs to be sent to the user A. When the transfer notification needs to be sent to the user A, the CAB server A forwards the transfer notification to the CAB client A.
Step S307: The CAB client A checks the CAB service settings or the personal preferences configured at the local by the user A, and judges whether the transfer notification needs to be sent to the user A. If yes, the process turns to S308; otherwise, the process ends.
   The CAB client A may check whether the received transfer notification is a repeated notification. If yes, the transfer notification is ignored.
Step S308: The CAB client A may generate location or index identifier (such as an index number or a user name) information of the user B in the contact list of the user A according to the information of the user B in the contact list of the user A, so as to find relevant information of the user B in the contact list of the user A according to the index identifier.
   Specifically, for the transfer notification in the CAB client A, the second identifier of the transfer notification can be replaced by the index identifier to generate a transfer notification including the index identifier and the first identifier. Alternatively, the index identifier may be added to the transfer notification to generate a transfer notification including the index identifier, the first identifier, and the second identifier. Alternatively, the index identifier may not be generated, and the transfer notification just includes the first identifier and the second identifier.
   It is checked whether the user B is included in the contacts of the user A according to the personal information (the second identifier or the index identifier) of the user B carried in the transfer notification. If yes, the process turns to step S309, and the contact user B of the user A is labeled as the contact of the CAB system; otherwise, the process ends.
Step S309,: The CAB client A verifies the personal information of the user B carried in the transfer notification through the CAB server B or the legacy system, that is, verifies the second identifier or the index identifier of the user B.
Step S310: The CAB client A shows the transfer notification of the user B to the user A, and reminds the user A that the user B in the contact list of the user A has transferred to be a CAB user B.
Step S311: The user A further subscribes and updates other detailed information of the user B according to CAB contact information (the first identifier) of the user B allocated after the transfer of the user B and carried in the transfer notification.

It can be seen from the above description that, in the embodiment of the present invention, the method for notifying the contacts of the address book transfer by using the clients is provided, so that the contact, that is, the second user, of the first user can receive the corresponding notification. Therefore, the two parties can update the contact information in time and use rich functions provided by the CAB after the transfer.

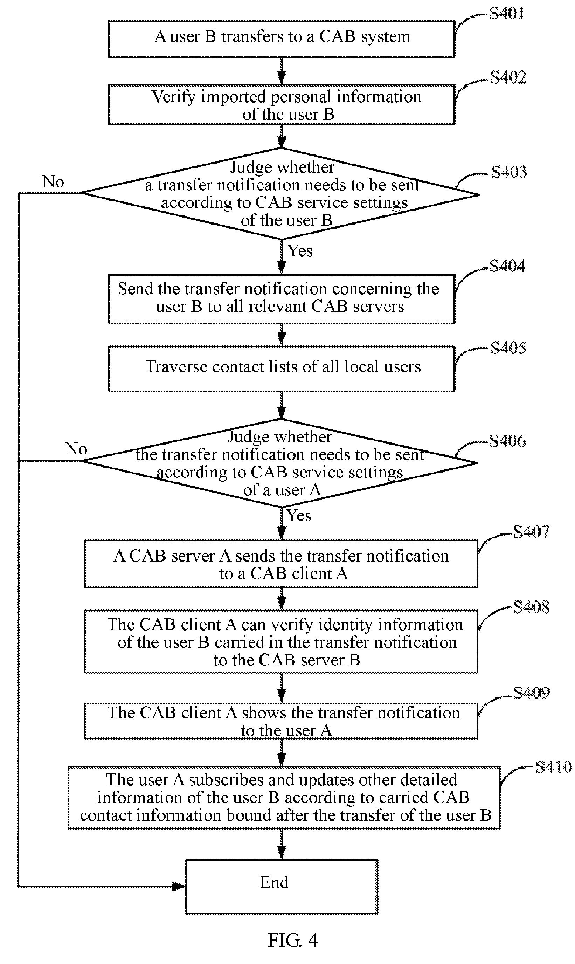

In a fourth embodiment, the present invention provides a transfer notification method. In the method, user information is directly transferred by broadcasting. In this embodiment, a contact list of a CAB user A already includes user B in a legacy address book. But a contact list of the user B in the legacy address book does not necessarily include contact information of the CAB user A. The user B in the legacy address book transfers to be a CAB user. A CAB server B broadcasts a transfer notification concerning the user B to other CAB servers. A CAB server A at a receiving end traverses contact information of all local users, and compares contact information of the user B carried in the transfer notification, finds the target user A, and sends the transfer notification concerning the user B. The specific messaging process is shown in FIG. 4, which includes the following steps:
Step S401: The user B transfers from the legacy address book system to a CAB system, and imports personal information of the user B originally in the legacy address book system to the CAB server B, a home server of the user B. The personal information includes identity information (such as an identity card number, a name) of the user B and/or contact information (such as a telephone number, an E-mail address, an instant messaging ID, and an SIP URI) of the user B. The personal information imported from the original legacy address book system to the CAB server B by the user B is a second identifier of the user B. The user B may select one or more pieces of imported or newly registered contact information as contact information allocated to the user B in the CAB system. The contact information allocated to the user B in the CAB system is a first identifier of the user B. The first identifier is new information of the user B in the CAB server B, and may be different from the personal information of the user B originally in the legacy address book system.
   Specifically, in the method for importing the personal information of the user B originally in the legacy address book system, the personal information may be directly copied from a database of the legacy address book system, input manually by the user or a system administrator, or imported and uploaded to the CAB server by the user through a CAB client.
   The user B may also choose not to import the personal information in the legacy address book system, and at this moment, the CAB server B temporarily obtains and caches the personal information of the user B in the legacy address book system.
Step S402: The CAB server B verifies the personal information of the user B imported to the CAB server B. In the verification method, the database of the legacy address book system may be queried, a PIN input by the user may be checked, and user service subscription information may be compared.
Step S403: The CAB server B checks CAB service settings or personal preferences of the user B, and judges whether the transfer notification needs to be sent. If yes, the process turns to S404; otherwise, the process ends.
Step S404: The CAB server B sends the transfer notification concerning the user B to all relevant CAB servers, and the first identifier of the user B and the second identifier of the user B are included.
   Specifically, the relevant CAB servers include all the CAB servers (such as the CAB server A) that are connected to the CAB server B directly or indirectly and are in local areas or other home areas, and at the same time also include the CAB server B (at this moment, the transfer notification can be replaced by internal message interaction in the CAB server B).
   The CAB server B may also send the transfer notification concerning the user B to other non-CAB address book systems through an interworking gateway. The notification may be in the form of conventional messages such as a short message, a multimedia message, and an instant message. The notification carries the first identifier of the user B and the second identifier of the user B.
Step S405: After receiving the transfer notification sent by the CAB server B, the CAB server A related to the CAB server B traverses contact lists of all of the local users, and checks whether information of each contact of each user matches the personal information of the user B one by one. When information of a contact includes the personal information of the user B, the contact is the second user in touch with the first user, for example, the user A. The user A is taken as a CAB target user of the transfer notification, and at the same time, the user B is labeled as a CAB contact; otherwise, the user is ignored.
Step S406: The CAB server A checks CAB service settings and personal preferences of the CAB target user, and judges whether the transfer notification needs to be sent. If yes, the process turns to S407; otherwise, the user is ignored.
Step S407: The CAB server A sends the transfer notification concerning the user B to a CAB client (for example, a CAB client A) of the CAB target user, to whom the transfer notification needs to be sent.
   Optionally, in this embodiment, the CAB server A may generate location or index identifier information (such as an index number or a user name) of the user B in the contact list of the user A according to the information of the user B in the contact list of the user A, replace the second identifier of the transfer notification with the index identifier, and generate a transfer notification including the index identifier and the first identifier. The index identifier may also be added to the transfer notification to generate a transfer notification including the index identifier, the first identifier, and the second identifier. Alternatively, the index identifier may be not generated, and the transfer notification including the first identifier and the second identifier is sent to the CAB client A directly.
Step S408: The CAB client A verifies the personal information of the user B carried in the transfer notification through the CAB server B or the legacy system. That is, the second identifier or the index identifier of the user B is verified.
Step S409: The CAB client A shows the transfer notification of the user B to the user A, and reminds the user A that the user B in the contact list thereof has transferred to be a CAB user B according to the index identifier or the second identifier of the user B in the contact list of the user A in the transfer notification.
Step S410: The user A further subscribes and updates other detailed information of the user B according to CAB contact information (that is, the first identifier) of the user B allocated after the transfer of the user B and carried in the transfer notification.

It can be seen from the above description that, in the embodiment of the present invention, the method for notifying the contacts of the address book transfer is provided by using the transfer notification method, so that the contact, that is, the second user, of the first user can receive the corresponding notification. Therefore, the two parties can update the contact information in time and use rich functions provided by the CAB after the transfer.

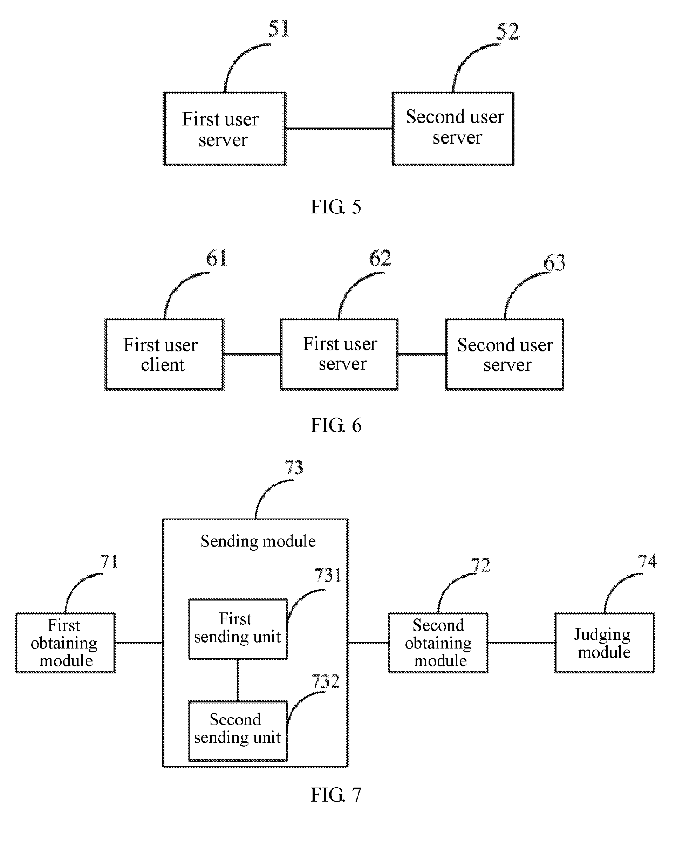

In a fifth embodiment, the present invention provides a transfer notification system. As shown in FIG. 5, the system includes a first user server 51 and a second user server 52.

The first user server 51 is configured to obtain a first identifier and a second identifier of a first user, obtain at least one user in touch with the first user as a second user, and send a transfer notification to the second user server.

The second user server 52 is configured to receive the transfer notification sent by the first user server 51, and forward the transfer notification to the second user.

Specifically, the first user server 51 is further configured to judge whether the transfer notification needs to be sent to the second user server 52 according to preferences of the first user and system settings.

In a sixth embodiment, the present invention provides a transfer notification system. As shown in FIG. 6, the system includes a first user client 61, a first user server 62, and a second user server 63.

The first user client 61 is configured to obtain a first identifier and a second identifier of a first user, obtain at least one user in touch with the first user as a second user, and send a transfer notification to the first user server 62.

The first user server 62 is configured to forward the transfer notification to the second user server 63 according to one of addresses of the second user.

The second user server 63 is configured to forward the transfer notification to the second user.

Specifically, the first user server 62 is further configured to send the transfer notification to each of at least one address of the second user according to the at least one address of the second user.

In a seventh embodiment, the present invention provides a server. As shown in FIG. 7, the server includes a first obtaining module 71, a second obtaining module 72, a sending module 73, and a judging module 74.

The first obtaining module 71 is configured to obtain a first identifier and a second identifier of a first user.

The second obtaining module 72 is configured to obtain at least one user in touch with the first user as a second user.

The sending module 73 is configured to send a transfer notification to the second user obtained by the second obtaining module 72. The transfer notification carries the first identifier and the second identifier of the first user obtained by the first obtaining module 71.

The judging module 74 is configured to judge whether the transfer notification needs to be sent to a server of the second user obtained by the second obtaining module 72 according to preferences of the first user and system settings.

Furthermore, the sending module 73 includes a first sending unit 731 and a second sending unit 732.

The first sending unit 731 is configured to send the transfer notification to an identifier meeting requirements of an address book system format when contact information of the second user includes the identifier meeting the requirements of the address book system format.

The second sending unit 732 is configured to send the transfer notification to an identifier not meeting the requirements of the address book system format through an interworking gateway when the contact information of the second user includes the identifier not meeting the requirements of the address book system format.

Through the above description of the implementation, it is clear to persons skilled in the art that the present invention may be accomplished through hardware, or through software plus a necessary universal hardware platform. Based on this, the technical solutions of the present invention may be embodied in the form of a software product. The software product may be stored in one nonvolatile storage media (for example, CD-ROM, USB flash drive, or removable hard disk) and contain several instructions used to instruct computer equipment (for example, a personal computer, a server, or network equipment) to perform the method according to the embodiments of the present invention.

Exemplary embodiments of the present invention are described. It should be noted by persons of ordinary skill in the art that several modifications and variations may be made without departing from the principle of the present invention, which should be construed as falling within the scope of the present invention.

## Claims

1. A transfer notification method, comprising:
obtaining a first identifier and a second identifier of a first user;
obtaining at least one user in touch with the first user as a second user; and
sending a transfer notification to the second user, wherein the transfer notification comprises the first identifier and the second identifier of the first user.

2. The method according to claim 1, wherein the sending the transfer notification to the second user comprises: sending the transfer notification to the second user through a second user server.

3. The method according to claim 2, wherein the transfer notification comprises an address of the second user, and the sending the transfer notification to the second user through the second user server comprises:
Sending the transfer notification to the second user through the second user server according to the address of the second user.

4. The method according to claim 2, wherein the sending the transfer notification to the second user through the second user server comprises:
sending the transfer notification comprising the first identifier and the second identifier of the first user to the second user server; replacing, by the second user server, the second identifier of the transfer notification with an index identifier of the first user in a contact list of the second user; and sending the changed transfer notification to the second user.

5. The method according to claim 1, wherein the sending the transfer notification to the second user comprises: sending the transfer notification to the second user through a first user server and the second user server.

6. The method according to claim 5, wherein the transfer notification comprises one of addresses of the second user, and the sending the transfer notification to the second user through the first user server and the second user server comprises:
sending the transfer notification to the second user through the first user server and the second user server according to the one of the addresses of the second user.

7. The method according to claim 5, wherein the transfer notification comprises at least one address of the second user, and the sending the transfer notification to the second user through the first user server and the second user server specifically comprises:
sending the transfer notification to the first user server, and sending, by the first user server, the transfer notification to each of the at least one address of the second user through the second user server according to the at least one address of the second user.

8. The method according to claim 1, wherein the obtaining the second identifier of the first user comprises:
obtaining the second identifier from an address book system or a user subscription database; or
obtaining the second identifier by inputting manually; or
obtaining the second identifier by importing a file.

9. The method according to claim 8, wherein the sending the transfer notification to the second user comprises:
sending the transfer notification to an identifier meeting requirements of an address book system format when contact information of the second user comprises the identifier meeting the requirements of the address book system format; and
sending the transfer notification to an identifier not meeting the requirements of the address book system format through an interworking gateway when the contact information of the second user comprises the identifier not meeting the requirements of the address book system format.

10. The method according to claim 1, wherein the obtaining the at least one user in touch with the first user as the second user comprises:
obtaining the at least one user in touch with the first user as the second user by broadcasting the transfer notification.

11. The method according to claim 10, wherein the obtaining the at least one user in touch with the first user as the second user by broadcasting the transfer notification comprises:
receiving, by the second user server, the transfer notification sent by the first user server to all relevant address book systems;
traversing all contact lists of local users in the second user server, wherein when contact information comprises the second identifier of the first user, the contact is the second user in touch with the first user.

12. A transfer notification system, comprising:
a first user server, configured to obtain a first identifier and a second identifier of a first user, obtain at least one user in touch with the first user as a second user, and send a transfer notification; and
a second user server, configured to receive the transfer notification sent by the first user server, and forward the transfer notification to the second user.

13. A transfer notification system, comprising:
a first user client, configured to obtain a first identifier and a second identifier of a first user, obtain at least one user in touch with the first user as a second user, and send a transfer notification;
a first user server, configured to receive the transfer notification sent by the first user client, and forward the transfer notification according to one of addresses of the second user; and
a second user server, configured to receive the transfer notification forwarded by the first user server, and forward the transfer notification to the second user.

14. The system according to claim 13, wherein the first user server is further configured to send the transfer notification to each of at least one address of the second user according to the at least one address of the second user.

15. A server, comprising:
a first obtaining module, configured to obtain a first identifier and a second identifier of a first user;
a second obtaining module, configured to obtain at least one user in touch with the first user as a second user; and
a sending module, configured to send a transfer notification to the second user.

16. The server according to claim 15, wherein the sending module comprises:
a first sending unit, configured to send the transfer notification to an identifier meeting requirements of an address book system format when contact information of the second user comprises the identifier meeting requirements of the address book system format; and
a second sending unit, configured to send the transfer notification to an identifier not meeting the requirements of the address book system format through an interworking gateway when the contact information of the second user comprises the identifier not meeting the requirements of the address book system format.

17. The server according to claim 15, wherein the second obtaining module comprises:
a receiving unit, configured to receive the transfer notification sent to all relevant address book systems; and
a traversing unit, configured to traverse all contact lists of local users, wherein when contact information comprises the second identifier of the first user, the contact is the second user in touch with the first user.

18. A client, comprising a server, wherein the server comprises:
a first obtaining module, configured to obtain a first identifier and a second identifier of a first user;
a second obtaining module, configured to obtain at least one user in touch with the first user as a second user; and
a sending module, configured to send a transfer notification to the second user.

19. The client according to claim 18, wherein the sending module comprises:
a first sending unit, configured to send the transfer notification to an identifier meeting requirements of an address book system format when contact information of the second user comprises the identifier meeting the requirements of the address book system format; and
a second sending unit, configured to send the transfer notification to an identifier not meeting the requirements of the address book system format through an interworking gateway when the contact information of the second user comprises the identifier not meeting the requirements of the address book system format.

20. The client according to claim 18, wherein the second obtaining module comprises:
a receiving unit, configured to receive the transfer notification sent to all relevant address book systems; and
a traversing unit, configured to traverse all contact lists of local users, wherein when contact information comprises the second identifier of the first user, the contact is the second user in touch with the first user.
